# EUROPÄISCHE PATENTSCHRIFT

(11) **EP 3 759 338 B1**
(45) Veröffentlichungstag und Bekanntmachung des Hinweises auf die Patenterteilung: **14.04.2021**
(21) Anmeldenummer: 19704766.5
(22) Anmeldetag: 06.02.2019
(51) Int. Cl.: F03B 13/06, H02J 3/38, F03B 15/00

(54) **KOMBINIERTES KRAFTWERK UND VERFAHREN ZUM BETRIEB**
COMBINED POWER PLANT AND METHOD FOR OPERATION
CENTRALE ÉLECTRIQUE COMBINÉE ET PROCÉDÉ POUR SON FONCTIONNEMENT

(30) Priorität: 28.02.2018 DE 102018104518
(43) Veröffentlichungstag der Anmeldung: 06.01.2021
(73) Patentinhaber: Voith Patent GmbH, 89522 Heidenheim (DE)
(72) Erfinder: LOCHSCHMIDT, Klaus, 89233 Neu-Ulm-Burlafingen (DE)
(74) Vertreter: Voith Patent GmbH - Patentabteilung
(86) Internationale Anmeldenummer: PCT/EP2019/052873
(87) Internationale Veröffentlichungsnummer: WO 2019/166202

(56) Entgegenhaltungen:
- EP-A1- 2 818 692
- WO-A1-2009/118572
- DE-U1-202007 016 031
- DE-U1-202011 100 466
- US-A1- 2017 260 961

## Beschreibung

Die vorliegende Erfindung betrifft ein kombiniertes Kraftwerk, welches die Bestandteile eines Photovoltaikparks (PVP) und eines Pumpspeicherkraftwerks umfasst (PSK). Außerdem betrifft die vorliegende Erfindung ein Verfahren zum Betrieb eines solchen kombinierten Kraftwerks.

Ein kombiniertes Kraftwerk umfassend die Bestandteile eines PVPs und eines PSKs sind aus dem Stand der Technik bekannt. Es sei hierzu auf die WO 2009/118572 A1 verwiesen. Das darin beschriebene kombinierte Kraftwerk ist mit hohen Investmentkosten verbunden, da zwei Druckrohrleitungen und zwei hydraulische Maschinensätze benötigt werden. Außerdem ist das kombinierte Kraftwerk so ausgelegt, dass die Wasserturbine kontinuierlich im Betrieb ist, und die Wasserpumpe die ganze Zeit läuft, wenn Solarstrom produziert wird.

Der Erfinder hat sich die Aufgabe gestellt ein gattungsgemäßes kombiniertes Kraftwerk anzugeben, das einfacher aufgebaut und daher kostengünstiger ist. Außerdem kommt das erfindungsgemäße kombinierte Kraftwerk mit kürzeren Betriebszeiten der zum PSK gehörigen Komponenten aus, was zu einer längeren Lebensdauer derselben führt.

Die gestellte Aufgabe wird durch ein kombiniertes Kraftwerk mit den Merkmalen von Anspruch 1 gelöst. Vorteilhafte Ausführungsformen ergeben sich aus den von Anspruch 1 abhängigen Unteransprüchen. Ein Verfahren zum Betrieb eines erfindungsgemäßen virtuellen Kraftwerks ergibt sich aus dem unabhängigen Verfahrensanspruch. Vorteilhafte Ausführungsformen des Betriebsverfahrens ergeben sich aus den abhängigen Verfahrensansprüchen.

Zur Lösung der Aufgabe hat sich der Erfinder von dem Gedanken leiten lassen, dass ein gattungsgemäßes kombiniertes Kraftwerk, dann besonders einfach aufgebaut sein wird, wenn es sich möglichst wenig von den bereits separat existierenden PVPs und PSKs in ihrer jeweils einfachsten Ausführungsform unterscheidet. Ein einfach aufgebauter PVP umfasst wenigstens ein Solarmodul, welches mit einem fremdgeführten Umrichter und einem Transformator ans Netz angeschlossen ist. Ein einfach aufgebautes PSK umfasst ein Oberwasserbecken, ein Unterwasserbecken, einen Wasserweg, welcher die Becken verbindet, eine reversible Pumpturbine, welche im Wasserweg angeordnet ist, und einen Motorgenerator, welcher mit der Pumpturbine verbunden und als Synchronmaschine ausgeführt ist. Das Pumpspeicherkraftwerk umfasst ferner einen Anfahrumrichter zum Anfahren der Pumpturbine im Pumpenmodus und einen Transformator, mit dem die Synchronmaschine ans Netz angebunden ist.

Die erfindungsgemäße Lösung wird nachfolgend anhand von Figuren erläutert. Darin ist im Einzelnen folgendes dargestellt:
- Figur 1: Erfindungsgemäßes kombiniertes Kraftwerk in einer ersten Ausführungsform;
- Figur 2: Erfindungsgemäßes Verfahren zum Betrieb eines erfindungsgemäßen kombinierten Kraftwerks gemäß Figur 1;
- Figur 3: Erfindungsgemäßes kombiniertes Kraftwerk in einer zweiten Ausführungsform;
- Figur 4: Erfindungsgemäßes Verfahren zum Betrieb eines erfindungsgemäßen kombinierten Kraftwerks gemäß Figur 3 oder Figur 5;
- Figur 5: Erfindungsgemäßes kombiniertes Kraftwerk in einer dritten Ausführungsform.

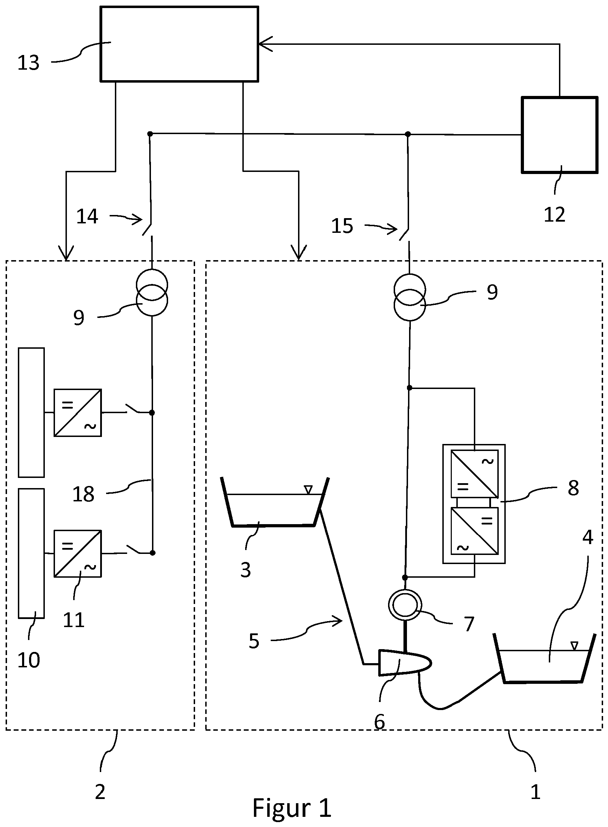

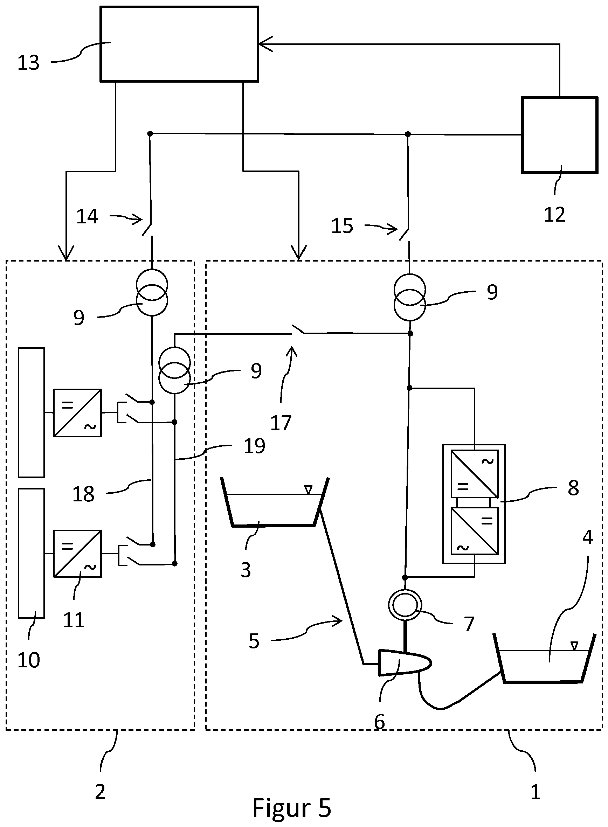

Figur 1 zeigt in schematischer Darstellung ein erfindungsgemäßes kombiniertes Kraftwerk in einer ersten Ausführungsform. Das Kraftwerk umfasst die Bestandteile von einem PSK, welches mit 1 bezeichnet ist, und die Bestandteile von einem PVP, welcher mit 2 bezeichnet ist. Dabei sind das PSK 1 und der PVP 2 rein gedankliche Konstrukte (daher auch nur gestrichelt dargestellt), und die Zuordnung der einzelnen Bestandteile des kombinierten Kraftwerks zum PSK 1 und PVP 2 in den Figuren und in der Beschreibung geschieht lediglich der Übersichtlichkeit halber und zur Erleichterung der Beschreibung des kombinierten Kraftwerkes. Bei manchen Elementen ist die Zuordnung auch rein willkürlich, wie z.B. der Leistungsschalter 17 in Figur 5.

Das PSK 1 umfasst ein Oberwasserbecken 3 und ein Unterwasserbecken 4, einen Wasserweg 5, welcher das Oberwasserbecken 3 mit dem Unterwasserbecken 4 verbindet, eine im Wasserweg 5 angeordnete reversible Pumpturbine 6, eine Synchronmaschine 7, welche mit der Pumpturbine 6 verbunden ist. Ferner umfasst das PSK 1 einen Anfahrumrichter 8 zum Anfahren der Pumpturbine 6. Der Übersichtlichkeit halber sind benötigte Schalter zum Zuschalten des Anfahrumrichters 8 in den Figuren nicht dargestellt. Dem Fachmann ist die Anbindung eines Anfahrumrichters 8 jedoch hinlänglich bekannt. Ferner umfasst das PSK 1 einen Transformator 9, welcher mit der Synchronmaschine 7 verbunden ist und die Schnittstelle des PSKs 1 für die aufgenommene oder abgegebene elektrische Leistung darstellt. Der Transformator 9 transformiert die von der Synchronmaschine gelieferte Wechselspannung auf das Niveau des Übertragungsnetzes.

Der PVP 2 umfasst wenigstens ein Photovoltaikmodul. Figur 1 zeigt beispielhaft zwei Photovoltaikmodule, von denen eines mit 10 bezeichnet ist. In der Regel besitzen große PVPs eine Vielzahl solcher Module. Jedes Photovoltaikmodul 10 ist mit einem fremdgeführten Umrichter verbunden, von denen einer mit 11 bezeichnet ist. Jeder Umrichter 11 ist über einen separaten Schalter mit einer Sammelschiene 18 verbunden. Der PVP 2 umfass einen Transformator 9, welcher die von den Umrichtern 11 gelieferte Wechselspannung auf das Niveau des Übertragungsnetzes transformiert. Der Transformator 9 stellt die Schnittstelle des PVPs 2 für die abgegebene elektrische Leistung dar.

Die beiden Transformatoren 9 vom PSK 1 und vom PVP 2 sind jeweils über die Leistungsschalter 14 und 15 mit dem Übertragungsnetz verbunden, welches schematisch durch einen mit 12 bezeichneten Kasten dargestellt wird. Der Leistungsschalter 14 ist dabei optional, da der PVP 2 auch durch die Schalter der einzelnen Umrichter 11 komplett vom Netz getrennt werden kann.

Das kombinierte Kraftwerk verfügt ferner über einen Leistungsregler, welcher mit 13 bezeichnet ist. Der Leistungsregler 13 nimmt Anforderungen durch das Übertragungsnetz entgegen, was durch den Pfeil vom Übertragungsnetz 12 zum Leistungsregler 13 angedeutet ist. Im Prinzip können die Anforderungen auch von anderer Stelle kommen, z.B. von der nationalen Netzagentur, oder die Anforderungen können auch vom Leistungsregler 13 selbst auf der Basis von aus dem Internet abgerufenen Informationen (z.B. den aktuellen Preisen an der Strombörse) beruhen. Anhand dieser Anforderungen steuert der Leistungsregler 13 sowohl die steuerbaren Bestandteile des PSKs 1 als auch die des PVP 2 (angedeutet durch Pfeile) als auch die Schalter 14 und 15 (nicht weiter angedeutet).

Wie im Detail der Leistungsregler 13 das kombiniert Kraftwerk steuert, hängt vom jeweilig gültigen nationalen Vergütungsschema ab. Außerdem können die national unterschiedlichen grid codes ebenfalls das Steuerverhalten des Leistungsreglers 13 beeinflussen. Einen weiteren Einfluss haben der jeweils in einem Land oder einer Region vorhandene Park von Stromerzeugern und der Ausbauzustand des Übertragungsnetzes. Weiterhin können Notsituationen, wie zum Beispiel der Ausfall von einem bedeutenden Stromerzeuger im Übertragungsnetz, zu einem abgewandelten Verhalten des kombinierten Kraftwerks führen. Daher adressiert das erfindungsgemäße Betriebsverfahren eines solchen kombinierten Kraftwerks nur zwei grundlegende Fälle:
1. Der Leistungsregler 13 setzt fest, dass die gesamte elektrische Leistung (P_{g}), die das kombinierte Kraftwerk ans Netz abgeben soll, kleiner als die gesamte momentan vom PVP 2 erzeugte elektrische Leistung (Pᵥ) ist, d.h. es soll P_{g} < Pᵥ sein.
2. Der Leistungsregler 13 setzt fest, dass die gesamte elektrische Leistung (P_{g}), die das kombinierte Kraftwerk ans Netz abgeben soll, wenigsten so groß ist, wie die gesamte momentan vom PVP 2 erzeugte elektrische Leistung (Pᵥ), d.h. es soll P_{g} ≥ Pᵥ sein.

Wie der Leistungsregler 13 zu diesen Festsetzungen kommt, hängt in der Regel von einer komplizierten Logik ab, die durch die oben genannten Einflussfaktoren gespeist wird, und daher je nach der territorialen Lage des kombinierten Kraftwerks unterschiedlich sein wird.

Der Fall 1 umfasst dabei auch den Zustand, dass P_{g} < 0 ist, d.h. dass elektrische Leistung aus dem Netz aufgenommen werden soll. Es sei erwähnt, dass das erfindungsgemäße kombinierte Kraftwerk sich auch dadurch vom zitierten Stand der Technik (WO 2009/118572 A1) unterscheidet, dass es Leistung aus dem Netz aufnehmen kann.

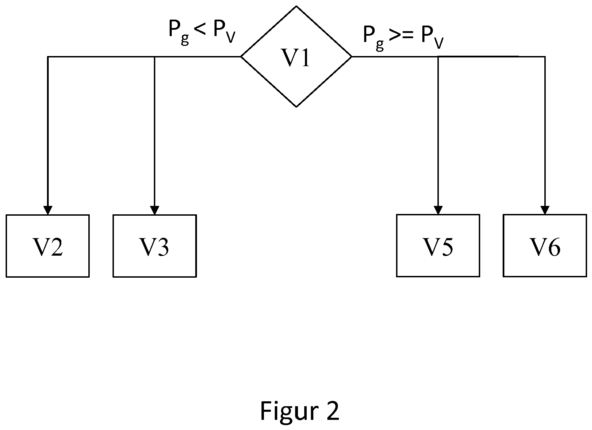

Figur 2 zeigt die Schritte des erfindungsgemäßen Verfahrens zum Betrieb eines kombinierten Kraftwerks gemäß Figur 1. Im mit V1 bezeichneten Schritt setzt der Leistungsregler fest, ob P_{g} < Pᵥ oder P_{g} ≥ Pᵥ sein soll. Im ersten Fall werden die mit V2 und V3 bezeichneten Schritte separat oder in Kombination ausgeführt. Dabei umfasst V2 das Trennen vom Netz 12 von wenigstens einem Photovoltaikmodul 10 und V3 das Pumpen der Pumpturbine 6, wobei die Synchronmaschine 7 synchron mit der Netzfrequenz arbeitet. Es ist klar, dass im Schritt V3 der Schalter 15 geschlossen sein muss. Im zweiten Fall werden die mit V5 und V6 bezeichneten Schritte separat oder in Kombination ausgeführt. Dabei umfasst V5 das Verbinden mit dem Netz 12 von allen Photovoltaikmodulen 10 und V6 das Turbinieren der Pumpturbine 6, wobei die Synchronmaschine 7 synchron mit der Netzfrequenz arbeitet. Es ist klar, dass im Schritt V5 der Schalter 14 und im Schritt V6 der Schalter 15 geschlossen sein müssen.

Im Folgenden sollen nun zur Illustration ein spezieller Fall des erfindungsgemäßen Verfahrens zum Betrieb eines kombinierten Kraftwerks gemäß Figur 1 aufgezeigt werden. Zum Verständnis ist vorab zu erwähnen, dass das Pumpen der Pumpturbine 6 in Schritt V3 mit einer festen Pumpleistung (Pₚ) erfolgen muss, da die Synchronmaschine 7 synchron mit der Netzfrequenz arbeitet und sich somit eine fixe Drehfrequenz der Pumpturbine 6 ergibt.

Es soll angenommen werden, dass ein Land über einen hohen Anteil von solar erzeugtem Strom verfügt. Bei zunehmend hohem Sonnenstand wird sich ein Überangebot von Solarstrom im Netz ergeben. Das Vergütungsmodell kann dann vorsehen, dass eine Drosselung der Leistungsabgabe eines Solarkraftwerks belohnt wird. Wie bei jedem anderen Solarkraftwerk auch, kann dies durch V2 erreicht werden. Das erfindungsgemäße kombinierte Kraftwerk kann dies jedoch auch durch V3 erreichen. Ohne die Anwendung von V2 (d.h. alle Photovoltaikmodule bleiben am Netz) ergibt sich P_{g} = Pᵥ - Pₚ, und bei Kombination von V2 mit V3 ergibt sich P_{g} < Pᵥ - Pₚ, was im Extremfall, wenn alle Photovoltaikmodule vom Netz getrennt werden, zu P_{g} = -Pₚ führt. Wenn V3 ausgeführt wird, ergibt sich der zusätzliche Vorteil, dass die im PSK 1 gespeicherte Energie zu einem späteren Zeitpunkt (z.B. bei Nacht) durch V6 in Netz eingespeist werden kann.

Der Erfinder hat erkannt, dass das kombinierte Kraftwerk in der Ausführungsform gemäß Figur 1, den Nachteil hat, dass in Schritt V3 nur mit konstanter Leistung (Pₚ) gepumpt werden kann. Der Nachteil fällt z.B. dann ins Gewicht, wenn zu einer bestimmten Zeit weder die Abgabe noch die Aufnahme von elektrischer Leistung an bzw. aus dem Netz vergütet wird, jedoch Pᵥ nicht Null ist, aber Pᵥ < Pₚ ist. Dann ist es nicht günstig, wenn V3 ausgeführt wird, da dazu Leistung aus dem Netz aufgenommen werden müsste, da Pᵥ nicht für das Pumpen ausreicht. Die Aufnahme von Leistung aus dem Netz würde in diesem Fall Kosten verursachen, die eventuell nicht wieder durch das Turbinieren zu anderer Zeit hereingeholt werden könnten. Auch wenn Pᵥ > Pₚ ist ergibt sich in dieser Situation ein Nachteil, da dann eigentlich mit viel höherer Leistung gepumpt werden könnte, ohne Leistung aus dem Netz aufzunehmen. Es bleibt dann nur noch die Maßnahme übrig, so viele Photovoltaikmodule vom Netz zu nehmen, bis die Leistung der am Netz verbliebenen Module ungefähr gleich groß ist wie Pₚ.

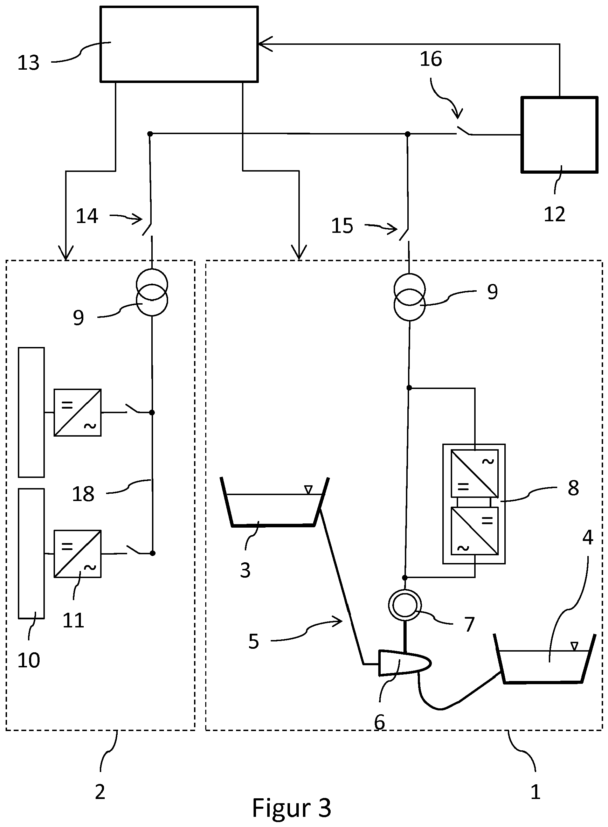

Die genannten Nachteile könnten dadurch behoben werden, dass das PSK 1 drehzahlvariabel ausgeführt wird, wie es von separaten PSKs her bekannt ist. Der Fachmann könnte dies durch die Verwendung einer doppelt gespeisten Asynchronmaschine anstelle der Synchronmaschine 7 oder durch den Einsatz eines Vollumrichters zwischen der Synchronmaschine 7 und dem Transformator 9 erreichen. Diese Maßnahmen sind jedoch sehr teuer. Der Erfinder hat erkannt, dass sich die genannten Nachteile auch viel einfacher und damit kostengünstiger beheben lassen, nämlich mit den Ausführungsformen des kombinierten Kraftwerks gemäß den Figuren 3 und 5.

Figur 3 zeigt das erfindungsgemäße kombinierte Kraftwerk in einer zweiten Ausführungsform. Die Bezeichnungen entsprechen den Bezeichnungen von Figur 1. Die zweite Ausführungsform gemäß Figur 3 unterscheidet sich von der ersten Ausführungsform gemäß Figur 1 nur durch einen zusätzlichen Leistungsschalter 16, welcher so angeordnet ist, dass das kombinierte Kraftwerk unabhängig vom Übertragungsnetz 12 betrieben werden kann, d.h. im sogenannten Inselbetrieb. Inwiefern sich dadurch der genannte Nachteil beheben lässt, wird klar durch die folgende Beschreibung des erfindungsgemäßen Betriebsverfahrens dieser Ausführungsform.

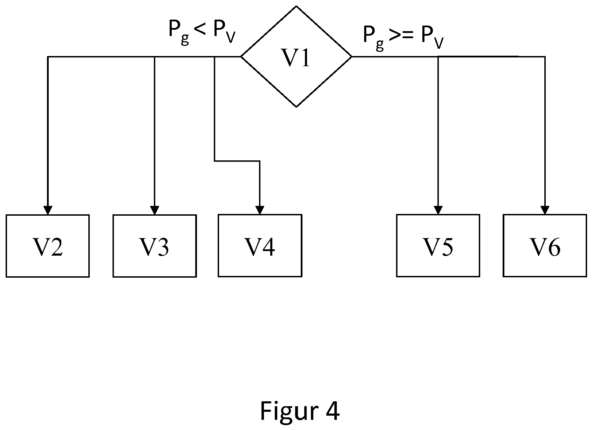

Figur 4 zeigt das erfindungsgemäße Verfahren zum Betrieb eines kombinierten Kraftwerks in der Ausführungsform gemäß Figur 3. Zusätzlich zu den Verfahrensschritten aus Figur 2 zeigt Figur 4 eine weitere Betriebsoption, welche mit V4 bezeichnet ist. V4 ist dem ersten Fall zugeordnet, d.h. dann wenn P_{g} < Pᵥ sein soll. Im Schritt V4 läuft das kombinierte Kraftwerk im Inselbetrieb, wobei sich die Pumpturbine 6 im Pumpenmodus befindet und die Synchronmaschine 7 mit variabler Drehzahl arbeitet. Unter variabler Drehzahl wird hier eine Drehzahl der Synchronmaschine 7 und damit der Pumpturbine 6 verstanden, die nicht durch die Netzfrequenz vorgegeben ist. Dabei wird der Betriebszustand V4 auf folgendem Weg erreicht: Die Synchronmaschine 7 wird durch den Anfahrumrichter 8 in Pumpenrichtung auf eine gewisse Drehzahl gebracht, die in der Regel nur einem Bruchteil ihrer Nennleistung entspricht. Dann wird der Leistungsschalter 14 geschlossen und mit weiteren in Figur 3 nicht dargestellten Schaltern (und Leitungen) dafür gesorgt, dass elektrische Leistung vom PVP 2 der Synchronmaschine 7 zugeführt wird. Dabei kann es notwendig sein, dass die einzelnen Photovoltaikmodule 10 sukzessive mit der Sammelschiene 18 verbunden werden. Während diesem Vorgang wird die Pumpturbine belastet. Dabei wird mit dem Anfahrumrichter 8 die Drehzahl weiter erhöht, bis ein Zustand erreicht ist, bei dem die Pumpleistung der Pumpturbine 6 der aktuell durch den PVP 2 erzeugten elektrischen Leistung entspricht, d.h. dass Pₚ^{var} = Pᵥ ist. Dann wird der Leistungsschalter 16 geöffnet (wobei die Leistungsschalter 14 und 15 geschlossen sind). Damit werden sowohl das PSK 1 als auch der PVP 2 vom Übertragungsnetz 12 getrennt. Das bedeutet dass der Betriebszustand V4 immer mit dem Betriebszustand V2 einhergeht, wobei alle Photovoltaikmodule 10 vom Übertragungsnetz 12 getrennt werden. Außerdem ist klar, dass Betriebszustand V4 nicht mit dem Betriebszustand V3 kombinierbar ist, da die Synchronmaschine 7 in V4 nicht synchron mit der Netzfrequenz arbeitet.

Wie im vorherigen Abschnitt bereits angedeutet zeigt der Übersichtlichkeit wegen Figur 3 nicht alle elektrischen Elemente, die dafür notwendig sind, um das erfindungsgemäße Kraftwerk in den Betriebszustand V4 zu bringen. Aus dem Gesagten kann der Fachmann aufgrund seines Fachwissens jedoch entnehmen, welche Elemente vorzusehen sind, ohne dass er dafür erfinderisch tätig werden müsste. Welche Elemente genau vorzusehen sind, hängt dabei auch davon ab, wie ein kombiniertes Kraftwerk im Detail ausgelegt ist (Anzahl der Photovoltaikmodule und deren Leistung, Leistung der Synchronmaschine und des Anfahrumrichters ...). Dasselbe gilt für die Ausführungsform gemäß Figur 5.

Der Betriebszustand V4 regelt sich in gewissen Grenzen selbst. Wenn die von den Photovoltaikmodulen 10 erzeugte elektrische Leistung steigt, dann erhöht sich die Drehfrequenz der Synchronmaschine 7 und der mit ihr verbundenen Pumpturbine 6 und damit die Pumpleistung. Im umgekehrten Fall vermindert sich die Drehfrequenz. Die Grenzen für den drehzahlvariablen Betrieb V4 sind durch den Drehzahlbereich gegeben, im welchem die Pumpturbine 6 mit vernünftiger Effizienz pumpen kann.

Im Betriebszustand V4 werden die fremdgeführten Umrichter 11 durch die elektrische Frequenz der Synchronmaschine 7 geführt. Es ist ferner klar, dass im Betriebszustand V4 eines kombinierten Kraftwerks gemäß Figur 3 P_{g} = 0 ist.

Im drehzahlvariablen Betrieb V4 kann die elektrische Leistung, die die Synchronmaschine 7 antreibt, auch durch das Zu- oder Abschalten von einzelnen Photovoltaikmodulen 10 mittels der zugehörigen Schalter auf die Sammelschiene 18 variiert werden. Wenn z.B. Pᵥ zu groß wird, so dass die Pumpturbine 6 aus dem noch sinnvoll zu verwendenden Drehzahlbereich nach oben herauslaufen würde, dann können so viele Photovoltaikmodule 10 von der Sammelschiene 18 getrennt werden, dass die Pumpturbine 6 noch unterhalb der maximal verwendbaren Drehzahl bleiben kann. Dabei kann die elektrische Leistung der von der Sammelschiene 18 getrennten Photovoltaikmodule 10 nicht verwendet werden und geht so verloren. Der Erfinder hat erkannt, dass dieser Nachteil durch ein erfindungsgemäßes kombiniertes Kraftwerk nach Figur 5 behoben werden kann.

Figur 5 zeigt das erfindungsgemäße kombinierte Kraftwerk in einer dritten Ausführungsform. Die Bezeichnungen entsprechen den Bezeichnungen von Figur 1. Die dritte Ausführungsform gemäß Figur 5 unterscheidet sich von der ersten Ausführungsform gemäß Figur 1 dadurch, dass der PVP 2 eine weitere Sammelschiene 19 umfasst, mit der die Photovoltaikmodule 10 über jeweils einen Schalter verbunden werden können. PVP 2 umfasst ferner einen weiteren Transformator 9 welcher mit der zusätzlichen Sammelschiene 19 verbunden ist.

Der zusätzliche Transformator 9 ist über einen Leistungsschalter, welcher mit 17 bezeichnet ist, mit der Synchronmaschine 7 verbunden.

Diese Anordnung kann dazu verwendet werden, dass nur ein Teil der Photovoltaikmodule 10 für den drehzahlvariablen Betrieb gemäß V4 verwendet werden, während die übrigen Photovoltaikmodule 10 in das Übertragungsnetz 12 einspeisen. Der Betriebszustand wird bei dieser Anordnung analog zu der Anordnung aus Figur 3 erreicht. In verkürzter Form kann Folgendes gesagt werden: Es wird wenigstens eines der Photovoltaikmodule 10 vom Übertragungsnetz 12 getrennt und mit der zusätzlichen Sammelschiene 19 verbunden (ggf. geschieht das sukzessive). Die Synchronmaschine 7 wird im Endeffekt durch den Anfahrumrichter 8 in Pumpenrichtung auf eine Drehzahl gebracht, so dass die Pumpleistung der Pumpturbine 6 bei dieser Drehzahl der aktuell durch die mit der zusätzlichen Sammelschiene 19 verbundenen Photovoltaikmodule 10 erzeugten elektrischen Leistung entspricht. Dabei sind der Leistungsschalter 15 geöffnet und der Leistungsschalter 17 geschlossen worden. Der Betriebszustand V4 bei einem kombinierten Kraftwerk gemäß Figur 5 geht immer mit dem Betriebszustand V2 einher, wobei jedoch im Gegensatz zu der Ausführungsform gemäß Figur 3 nicht alle Photovoltaikmodule 10 vom Übertragungsnetz 12 getrennt werden. Weiterhin gilt, dass Betriebszustand V4 nicht mit dem Betriebszustand V3 kombinierbar ist, da die Synchronmaschine 7 in V4 nicht synchron mit der Netzfrequenz arbeitet. Im Unterschied zur Ausführungsform gemäß Figur 3 ist bei der Ausführungsform gemäß Figur 5 im Betriebszustand V4 P_{g} nicht zwangsläufig 0, da - wenn gewünscht - ein Teil der Photovoltaikmodule 10 weiterhin ins Übertragungsnetz 12 einspeist.

Ein erfindungsgemäßes Kraftwerk gemäß der Ausführungsform nach Figur 5 stellt somit die höchste Flexibilität im Betrieb zur Verfügung. Aus dem Gesagten ist auch klar, dass der Vorteil dieser Ausführungsform nur dann zum Tragen kommen kann, wenn das Kraftwerk wenigstens zwei Photovoltaikmodule 10 mit den zugehörigen Umrichtern 11 umfasst.

Es sei noch erwähnt, dass ein erfindungsgemäßes kombiniertes Kraftwerk in den Ausführungsformen gemäß Figur 1 oder Figur 5 optional auch einen weiteren Leistungsschalter umfassen kann, mit dem das gesamte kombinierte Kraftwerk vom Übertragungsnetz (12) getrennt werden kann, d.h. einen Leistungsschalter wie den mit 16 bezeichneten aus Figur 3.

Wenn der PVP 2 eine sehr hohe elektrische Gesamtleistung aufweist, dann kann es notwendig sein, dass das PSK 1 über mehr als einen Maschinensatz verfügen muss, um die für eine sinnvolle Kombination notwendige Leistung zur Verfügung stellen zu können. Es ist jedoch klar, dass auch in diesem Fall ein erfindungsgemäßes kombiniertes Kraftwerk einfacher aufgebaut ist, als ein kombiniertes Kraftwerk gemäß der WO 2009/118572 A1 mit gleichen Leistungsdaten, da pro Maschinensatz immer nur eine Druckrohrleitung benötigt wird, und durch die Verwendung von reversiblen Pumpturbinen nur eine elektrische Maschine anstelle der doppelten Anzahl wie bei der WO 2009/118572 A1. Außerdem sind die Betreibzeiten der zum PSK gehörigen Komponenten kürzer, da der PVP des erfindungsgemäßen kombinierten Kraftwerks direkt ins Übertragungsnetz einspeisen kann, ohne dass gleichzeitig eine Turbine arbeiten muss.

Die Verwendung von mehreren Maschinensätzen führt jedoch auch dazu, dass sich weitere Freiheitsgrade im Betrieb ergeben, wodurch die Flexibilität erhöht werden kann. Das ist insbesondere günstig für ein erfindungsgemäßes kombiniertes Kraftwerk in der Ausführungsform nach Figur 1, da auch so die oben genannten Nachteile dieser Ausführungsform vermindert werden können. So kann optional im Schritt V3 einer (oder mehrere) der Maschinensätze turbinieren (während die anderen pumpen) und zwar mit einer kleineren Leistung als die konstante Pumpleistung der anderen Sätze. Dadurch ergibt sich eine Netto-Pumpleistung die durch die regelbare Leistung des Turbinenbetriebes selbst regelbar wird. Das entspricht dem Betrieb eines PSK mit ternärem Maschinensatz im hydraulischen Kurzschluss.

## Patentansprüche

1. Kombiniertes Kraftwerk zum Anbinden an ein Übertragungsnetz (12), umfassend ein Oberwasserbecken (3), ein Unterwasserbecken (4), einen Wasserweg (5), welcher zwischen dem Oberwasserbecken (3) und dem Unterwasserbecken (4) verbindend angeordnet ist, eine im Wasserweg (5) angeordnete hydraulische Maschine (6), eine mit der hydraulischen Maschine (6) verbundene elektrische Maschine (7), ein Photovoltaikmodul (10) und ein mit dem Photovoltaikmodul (10) verbundener fremdgeführter Umrichter (11) **dadurch gekennzeichnet, dass** das kombinierte Kraftwerk einen ersten und einen zweiten Transformator (9) umfasst, und die hydraulische Maschine (6) als reversible Pumpturbine ausgebildet ist, und die elektrische Maschine (7) als Synchronmaschine ausgebildet ist, welche über den ersten Transformator (9) und einen Leistungsschalter (15) mit dem Übertragungsnetz (12) verbunden ist, und dass das Kraftwerk einen Anfahrumrichter (8) zum Anfahren der Synchronmaschine (7) und eine Sammelschiene (18) umfasst, mit welcher der fremdgeführte Umrichter (11) über einen Schalter verbunden ist, und wobei die Sammelschiene (18) über den zweiten Transformator (9) mit dem Übertragungsnetz (12) verbunden ist, und dass das Kraftwerk einen Leistungsregler (13) umfasst, welcher so ausgebildet ist, dass er alle Schalter des Kraftwerks, den Anfahrumrichter (8), die Synchronmaschine (7) und die reversible Pumpturbine (6) steuern kann.

2. Kombiniertes Kraftwerk nach Anspruch 1, wobei das Kraftwerk einen weiteren Leistungsschalter (16) umfasst, welcher vom Leistungsregler (13) gesteuert werden kann und so angeordnet ist, dass er die mit dem Übertragungsnetz (12) verbundenen elektrischen Komponenten vom demselben trennen kann.

3. Kombiniertes Kraftwerk nach Anspruch 1, wobei das Kraftwerk wenigstens zwei Photovoltaikmodule (10), wenigsten zwei fremdgeführten Umrichter (11), von denen jeder jeweils mit einem Photovoltaikmodul (10) verbunden ist, eine weitere Sammelschiene (19) und einen dritten Transformator (9) umfasst, wobei die Sammelschiene (19) mit dem dritten Transformator (9) verbunden ist, und jeder der Umrichter (11) mit der weiteren Sammelschiene (11) über Schalter verbunden werden kann, und das Kraftwerk ferner einen weiteren Leistungsschalter (17) umfasst, über den der dritte Transformator (9) mit der Synchronmaschine (7) verbunden werden kann, und wobei der Leistungsregler (13) den Leistungsschalter (17) und die Schalter zwischen der weiteren Sammelschiene (19) und den Umrichtern (11) steuern kann.

4. Kombiniertes Kraftwerk nach Anspruch 1, wobei das Kraftwerk wenigstens zwei Pumpturbinen (6) und wenigstens zwei Synchronmaschinen (7) umfasst.

5. Verfahren zum Betrieb eines Kraftwerks nach Anspruch 1, wobei das Verfahren die folgenden Schritte umfasst:
V1: Festlegen der elektrischen Leistung, die von dem Kraftwerk an das Übertragungsnetz (12) abgegeben werden soll, durch den Leistungsregler (13);
V2: Trennen vom Übertragungsnetz (12) von wenigstens einem Photovoltaikmodul (10);
V3: Pumpen der Pumpturbine (6);
V5: Verbinden mit dem Übertragungsnetz (12) von allen Photovoltaikmodulen (10);
V6: Turbinieren der Pumpturbine (6);
wobei die Schritte V2 und V3 dann einzeln oder in Kombination erfolgen, wenn in Schritt V1 festgelegt wurde, dass die elektrische Leistung, die von dem Kraftwerk an das Übertragungsnetz (12) abgegeben werden soll, kleiner ist, als die gesamte aktuell erzeugte elektrische Leistung von allen Photovoltaikmodulen (10), und wobei die Schritte V5 und V6 dann einzeln oder
in Kombination erfolgen, wenn in Schritt V1 festgelegt wurde, dass die elektrische Leistung, die von dem Kraftwerk an das Übertragungsnetz (12) abgegeben werden soll, wenigstens so groß ist, wie die gesamte aktuell erzeugte elektrische Leistung von allen Photovoltaikmodulen (10), und wobei die Synchronmaschine (7) in den Schritten V3 und V6 synchron mit der Netzfrequenz arbeitet.

6. Verfahren nach Anspruch 5 zum Betrieb eines Kraftwerks nach Anspruch 2, wobei das Verfahren zusätzlich den folgenden Schritt umfasst:
V4: Pumpen der Pumpturbine (6) mit variabler Drehzahl;
wobei in Schritt V4 die Synchronmaschine (7) nicht synchron mit der Netzfrequenz arbeitet und der Leistungsschalter (16) geöffnet und der Leistungsschalter (15) geschlossen sind, so dass das Kraftwerk vom Übertragungsnetz (12) getrennt ist, und die Synchronmaschine (7) mit der Sammelschiene (18) verbunden ist, wobei der Schritt V4 alternativ zu Schritt V3 und in Kombination mit Schritt V2 ausgeführt wird, wenn in Schritt V1 festgelegt wurde, dass die elektrische Leistung, die von dem Kraftwerk an das Übertragungsnetz (12) abgegeben werden soll, kleiner ist, als die gesamte aktuell erzeugte elektrische Leistung von allen Photovoltaikmodulen (10), und wobei in dem Fall, dass Schritt V2 in Kombination mit V4 ausgeführt wird, in Schritt V2 alle Photovoltaikmodule (10) vom Übertragungsnetz (12) getrennt werden.

7. Verfahren nach Anspruch 5 zum Betrieb eines Kraftwerks nach Anspruch 3, wobei das Verfahren zusätzlich den folgenden Schritt umfasst:
V4: Pumpen der Pumpturbine (6) mit variabler Drehzahl;
wobei in Schritt V4 die Synchronmaschine (7) nicht synchron mit der Netzfrequenz arbeitet und der Leistungsschalter (15) geöffnet ist, so dass die Synchronmaschine (7) nicht mit dem Übertragungsnetz (12) verbunden ist, und wobei der Leistungsschalter (17) geschlossen ist, so dass die Synchronmaschine (7) mit der weiteren Sammelschiene (19) verbunden ist, wobei der Schritt V4 alternativ zu Schritt V3 und in Kombination mit Schritt V2 ausgeführt wird, wenn in Schritt V1 festgelegt wurde, dass die elektrische Leistung, die von dem Kraftwerk an das Übertragungsnetz (12) abgegeben werden soll, kleiner ist, als die gesamte aktuell erzeugte elektrische Leistung von allen Photovoltaikmodulen (10).

8. Verfahren nach Anspruch 5 zum Betrieb eines Kraftwerks nach Anspruch 4, wobei in Schritt V3 entweder alle Pumpturbinen (6) pumpen oder optional eine Pumpturbine (6) turbiniert.

## Claims

1. Combined power plant for connection to a transmission grid (12), comprising an upper water tank (3), a lower water tank (4), a waterway (5) which is arranged in a connecting manner between the upper water tank (3) and the lower water tank (4), a hydraulic machine (6) arranged in the waterway (5), an electrical machine (7) connected to the hydraulic machine (6), a photovoltaic module (10) and an externally commutated converter (11) connected to the photovoltaic module (10), **characterized in that** the combined power plant comprises a first and a second transformer (9), and the hydraulic machine (6) is in the form of a reversible pump turbine, and the electrical machine (7) is in the form of a synchronous machine which is connected to the transmission grid (12) via the first transformer (9) and a circuit breaker (15), and **in that** the power plant comprises a start-up converter (8) for starting up the synchronous machine (7) and a busbar (18), to which the externally commutated converter (11) is connected via a switch, and wherein the busbar (18) is connected to the transmission grid (12) via the second transformer (9), and **in that** the power plant comprises a power controller (13) which is designed in such a manner that it can control all switches of the power plant, the start-up converter (8), the synchronous machine (7) and the reversible pump turbine (6).

2. Combined power plant according to Claim 1, wherein the power plant comprises a further circuit breaker (16) which can be controlled by the power controller (13) and is arranged in such a manner that it can disconnect the electrical components connected to the transmission grid (12) from the latter.

3. Combined power plant according to Claim 1, wherein the power plant comprises at least two photovoltaic modules (10), at least two externally commutated converters (11), each of which is respectively connected to a photovoltaic module (10), a further busbar (19) and a third transformer (9), wherein the busbar (19) is connected to the third transformer (9), and each of the converters (11) can be connected to the further busbar (11) via switches, and the power plant also comprises a further circuit breaker (17) which can be used to connect the third transformer (9) to the synchronous machine (7), and wherein the power controller (13) can control the circuit breaker (17) and the switches between the further busbar (19) and the converters (11).

4. Combined power plant according to Claim 1, wherein the power plant comprises at least two pump turbines (6) and at least two synchronous machines (7).

5. Method for operating a power plant according to Claim 1, wherein the method comprises the following steps:
V1: using the power controller (13) to determine the electrical power which is intended to be output by the power plant to the transmission grid (12);
V2: disconnecting at least one photovoltaic module (10) from the transmission grid (12);
V3: pumping the pump turbine (6);
V5: connecting all photovoltaic modules (10) to the transmission grid (12);
V6: turbining the pump turbine (6);
wherein steps V2 and V3 are carried out individually or in combination when it has been determined in step V1 that the electrical power which is intended to be output by the power plant to the transmission grid (12) is less than the total electrical power currently generated by all photovoltaic modules (10), and wherein steps V5 and V6 are carried out individually or in combination when it has been determined in step V1 that the electrical power which is intended to be output by the power plant to the transmission grid (12) is at least as large as the total electrical power currently generated by all photovoltaic modules (10), and wherein the synchronous machine (7) operates in sync with the grid frequency in steps V3 and V6.

6. Method according to Claim 5 for operating a power plant according to Claim 2, wherein the method additionally comprises the following step:
V4: pumping the pump turbine (6) at a variable speed;
wherein the synchronous machine (7) does not operate in sync with the grid frequency in step V4 and the circuit breaker (16) is open and the circuit breaker (15) is closed, with the result that the power plant is disconnected from the transmission grid (12), and the synchronous machine (7) is connected to the busbar (18), wherein step V4 is carried out as an alternative to step V3 and in combination with step V2 if it has been determined in step V1 that the electrical power which is intended to be output by the power plant to the transmission grid (12) is less than the total electrical power currently generated by all photovoltaic modules (10), and wherein, if step V2 is carried out in combination with V4, all photovoltaic modules (10) are disconnected from the transmission grid (12) in step V2.

7. Method according to Claim 5 for operating a power plant according to Claim 3, wherein the method additionally comprises the following step:
V4: pumping the pump turbine (6) at a variable speed;
wherein the synchronous machine (7) does not operate in sync with the grid frequency in step V4 and the circuit breaker (15) is open, with the result that the synchronous machine (7) is not connected to the transmission grid (12), and wherein the circuit breaker (17) is closed, with the result that the synchronous machine (7) is connected to the further busbar (19), wherein step V4 is carried out as an alternative to step V3 and in combination with step V2 if it has been determined in step V1 that the electrical power which is intended to be output by the power plant to the transmission grid (12) is less than the total electrical power currently generated by all photovoltaic modules (10) .

8. Method according to Claim 5 for operating a power plant according to Claim 4, wherein either all pump turbines (6) pump or a pump turbine (6) optionally turbines in step V3.

## Revendications

1. Centrale électrique combinée destinée à être raccordée à un réseau de transmission (12) et comprenant un bassin d'eau supérieur (3), un bassin d'eau inférieur (4), une voie d'eau (5) qui est disposée reliant le bassin d'eau supérieur (3) et le bassin d'eau inférieur (4), une machine hydraulique (6) disposée dans la voie d'eau (5), une machine électrique (7) reliée à la machine hydraulique (6), un module photovoltaïque (10) et un convertisseur à commande externe (11) relié au module photovoltaïque (10), **caractérisée en ce que** la centrale électrique combinée comprend un premier et un deuxième transformateur (9), et la machine hydraulique (6) est conçue comme une turbine de pompe réversible, et la machine électrique (7) est conçue comme une machine synchrone qui est reliée, par le biais du premier transformateur (9) et d'un disjoncteur (15), au réseau de transmission (12), et **en ce que** la centrale électrique comprend un convertisseur de démarrage (8) destiné à démarrer la machine synchrone (7) et une barre collectrice (18) à laquelle le convertisseur à commande externe (11) est relié par le biais d'un commutateur, et la barre collectrice (18) étant reliée au réseau de transmission (12) par le biais du deuxième transformateur (9), et **en ce que** la centrale électrique comprend un régulateur de puissance (13) qui est conçu de manière à pouvoir commander tous les commutateurs de la centrale électrique, le convertisseur de démarrage (8), la machine synchrone (7) et la turbine de pompe réversible (6) .

2. Centrale électrique combinée selon la revendication 1, la centrale électrique comprenant un autre disjoncteur (16) qui peut être commandé par le régulateur de puissance (13) et qui est disposé de manière à pouvoir séparer les composants électriques, reliés au réseau de transmission (12), de celui-ci.

3. Centrale électrique combinée selon la revendication 1, la centrale électrique comprenant au moins deux modules photovoltaïques (10), au moins deux convertisseurs à commande externe (11), qui sont chacun reliés à un module photovoltaïque (10), une autre barre collectrice (19) et un troisième transformateur (9), la barre collectrice (19) étant reliée au troisième transformateur (9), et chacun des convertisseurs (11) pouvant être relié à l'autre barre collectrice (11) par le biais des commutateurs, et la centrale électrique comprenant en outre un autre disjoncteur (17) par le biais duquel le troisième transformateur (9) peut être relié à la machine synchrone (7), et le régulateur de puissance (13) pouvant commander le disjoncteur (17) et les commutateurs entre l'autre barre collectrice (19) et les convertisseurs (11).

4. Centrale électrique combinée selon la revendication 1, la centrale électrique comprenant au moins deux turbines de pompe (6) et au moins deux machines synchrones (7).

5. Procédé de fonctionnement d'une centrale électrique selon la revendication 1, le procédé comprenant les étapes suivantes :
V1 : spécifier la puissance électrique que doit fournir la centrale électrique au réseau de transmission (12) par le biais du régulateur de puissance (13) ;
V2 : séparer le réseau de transmission (12) d'au moins un module photovoltaïque (10) ;
V3 : faire pomper la turbine de pompe (6) ;
V5 : relier tous les modules photovoltaïques (10) au réseau de transmission (12) ;
V6 : faire turbiner la turbine de pompe (6);
les étapes V2 et V3 étant réalisées alors individuellement ou en combinaison s'il a été spécifié à l'étape V1 que la puissance électrique que doit fournir la centrale électrique au réseau de transmission (12) est inférieure à la puissance électrique totale actuellement générée de tous les modules photovoltaïques (10), et les étapes V5 et V6 étant réalisées alors individuellement ou en combinaison s'il a été spécifié à l'étape V1 que la puissance électrique que doit fournir la centrale électrique au réseau de transmission (12) est au moins égale à la puissance électrique totale actuellement générée de tous les modules photovoltaïques (10), et la machine synchrone (7) fonctionnant de manière synchrone avec la fréquence du réseau aux étapes V3 et V6.

6. Procédé selon la revendication 5 de fonctionnement d'une centrale électrique selon la revendication 2, le procédé comprenant en outre l'étape suivante :
V4 : faire pomper la turbine de pompe (6) à une vitesse de rotation variable ;
à l'étape V4 la machine synchrone (7) ne fonctionnant pas de manière synchrone avec la fréquence du réseau et le disjoncteur (16) étant ouvert et le disjoncteur (15) étant fermé de sorte que la centrale électrique soit séparée du réseau de transmission (12) et la machine synchrone (7) soit reliée à la barre collectrice (18), l'étape V4 étant réalisée alternativement à l'étape V3 et en combinaison avec l'étape V2 s'il a été spécifié à l'étape V1 que la puissance électrique que doit fournir la centrale électrique au réseau de transmission (12) est inférieure à la puissance électrique totale générée par tous les modules photovoltaïques (10), et dans le cas où l'étape V2 est réalisée en combinaison avec V4, tous les modules photovoltaïques (10) étant séparés à l'étape V2 du réseau de transmission (12).

7. Procédé selon la revendication 5 de fonctionnement d'une centrale électrique selon la revendication 3, le procédé comprenant en outre l'étape suivante :
V4 : faire pomper la turbine de pompe (6) à une vitesse de rotation variable ;
à l'étape V4 la machine synchrone (7) ne fonctionnant pas de manière synchrone avec la fréquence du réseau et le disjoncteur (15) étant ouvert de sorte que la machine synchrone (7) ne soit pas reliée au réseau de transmission (12), et le disjoncteur (17) étant fermé de sorte que la machine synchrone (7) soit reliée à l'autre barre collectrice (19), l'étape V4 étant réalisée alternativement à l'étape V3 et en combinaison avec l'étape V2 s'il a été spécifié à l'étape V1 que la puissance électrique que doit fournir la centrale électrique au réseau de transmission (12) est inférieure à la puissance électrique totale générée par tous les modules photovoltaïques (10).

8. Procédé selon la revendication 5 de fonctionnement d'une centrale électrique selon la revendication 4, à l'étape V3 soit toutes les turbines de pompe (6) étant mises à pomper, soit éventuellement une turbine de pompe (6) étant mise à turbiner.
